# EUROPÄISCHE PATENTANMELDUNG

(11) **EP 1 500 780 A1**
(43) Veröffentlichungstag der Anmeldung: **26.01.2005**
(21) Anmeldenummer: 04013844.8
(22) Anmeldetag: 14.06.2004
(51) Int. Cl.: E21B 6/04, B23B 41/00

(54) **Bohrverfahren und Bohrvorrichtung**

(30) Priorität: 24.07.2003 DE 10335020
(71) Anmelder: Topf, Ernst, 72644 Oberboihingen (DE)
(72) Erfinder: Topf, Ernst, 72644 Oberboihingen (DE)
(74) Vertreter: Jakelski, Joachim, Dr.

(57) **Zusammenfassung**

Es werden ein Bohrverfahren und eine Bohrvorrichtung vorgeschlagen, bei denen ein Bohrer (10) mit einer vorgebbaren Drehfrequenz angetrieben und bei denen eine Vorschubbewegung (64) des Bohrers (10) vorgegeben wird. Der Vorschubbewegung (64) wird eine kontinuierliche, in Bohrrichtung vorund zurückgehende Pulsationsbewegung (62) mit vorgebbarer Pulsationsfrequenz und vorgebbarem Pulsationshub (Sp) überlagert. Das erfindungsgemäße Verfahren und die erfindungsgemäße Vorrichtung, die beim Spiralbohren und insbesondere beim Tiefbohren eingesetzt werden können, ermöglichen einen kontinuierlichen Bohrvorgang mit einem zuverlässigen Spanbruch, ohne dass der Bohrer (10) aus dem Schnitt genommen oder der Bohrvorgang unterbrochen werden muss.

## Beschreibung

### Stand der Technik

Die Erfindung geht aus von einem Bohrverfahren und einer Bohrvorrichtung nach der Gattung der unabhängigen Ansprüche.

Die beim Bohren von Werkstücken entstehenden langen Bohrspäne können zu Verstopfungen sowohl im Bohrloch als auch im Bohrer und letztlich zu einem Werkzeugbruch führen. Das Problem tritt verstärkt bei lang spanenden Werkstoffen auf. Insbesondere beim Tiefbohren mit Einlippen- und/oder BTA-Werkzeugen ist das Problem von zentraler Bedeutung.

Bei einem Werkzeugbruch vermindert sich nicht nur die Standzeit. Es muss damit gerechnet werden, dass die Werkzeugperipherie wie beispielsweise Bohrbuchsen und/oder Führungselemente beschädigt werden können.

Kurze Späne und ein guter Spänetransport werden mit Sonderanschliffen der Bohrer und Spanleitstufen erzielt. Spezielle Sonderanschliffe der Bohrer mit Spanbrechern sind kostenintensiv und vermindern die Anzahl der möglichen Nachschliffe. Der Hartmetallverschleiß ist erhöht.
Beim Spiralbohren muss öfters entspänt werden, wodurch sich ebenfalls die Standzeit vermindert bzw. die Taktzeit verlängert.

Aus der DE 31 39 540 A1 ist eine Bohrmaschine mit intermittierender Rückholung der Bohrspindel bekannt geworden, bei welcher der Bohrer während des Bohrens zum Ausräumen der Späne aus Bohrung und Bohrer intermittierend schnell ganz zurückgezogen und wieder schnell vorgebracht wird. Der Bohrer wird bei jedem Zurückziehen aus dem Schnitt genommen. Bei der vorbekannten Vorgehensweise muss darauf geachtet werden, dass die Spitze des Bohrers nicht auf dem Boden des Bohrlochs aufschlägt. Andernfalls muss mit einer Beschädigung der Bohrerschneide oder sogar mit einem Bohrerbruch gerechnet werden. Bei jedem Zurückziehen des Bohrers entstehen in der Bohrung Stufen.

Der Bohrer ist mit einer Innenspindel verbunden, die gegenüber einer Außenspindel in axialer Richtung verschiebbar ist. Sowohl die Außen- als auch die Innenspindel drehen sich mit einer vorgegebenen Drehfrequenz. Beide Spindeln führen eine Vorschubbewegung durch, der das intermittierende vollständige Zurückziehen des Bohrers aus der Bohrung überlagert ist.

Aus der DE 101 09 990 A1 ist ein Bohrverfahren bekannt geworden, das für lang spanende Werkstücke und große Ausnehmungstiefen eingesetzt werden kann. Nach einer vorgegebenen Anzahl von Umdrehungen des Bohrers mit Vorschub wird eine vorgegebene Anzahl von Umdrehungen ohne Vorschub gearbeitet. Bei dem vorbekannten Intervallbohren wird der Bohrvorgang unterbrochen, wobei der Bohrer aus dem Schnitt geht.

Der Erfindung liegt die Aufgabe zugrunde, ein Bohrverfahren und eine Bohrvorrichtung anzugeben, die ein kontinuierliches Bohren, insbesondere mit unterschiedlichen Spandicken ermöglichen und während des Bohrvorgangs zuverlässig zu einem Spanbruch führen.

Die Aufgabe wird durch die in den unabhängigen Ansprüchen angegebenen Merkmale jeweils gelöst.

Vorteile der Erfindung

Die erfindungsgemäßen Vorgehensweisen gehen davon aus, dass ein Bohrer mit einer vorgebbaren Drehfrequenz angetrieben wird, wobei eine vorgegebene Vorschubbewegung vorgesehen ist. Erfindungsgemäß ist vorgesehen, dass der Vorschubbewegung eine kontinuierliche, in Bohrrichtung vor- und zurückgehende Pulsationsbewegung mit vorgebbarer Pulsationsfrequenz und vorgebbarem Pulsationshub überlagert wird.

Ein wesentlicher Vorteil der erfindungsgemäßen Vorgehensweisen liegt darin, dass die Spanform derart beeinflusst werden kann, dass ein Spanbruch gewährleistet ist, bei dem kurze Späne entstehen, die leicht abtransportiert werden können. Der Abtransport der Bohrspäne wird vorzugsweise von einem Kühlmittel übernommen.

Ein ganz wesentlicher Vorteil der erfindungsgemäßen Vorgehensweisen liegt darin, dass die Vorschubbewegung, die Pulsationsfrequenz sowie der Pulsationshub derart aufeinander abgestimmt werden können, dass der Bohrer stets im Schnitt bleibt.

Vorteilhafte Weiterbildungen und Ausgestaltungen der erfindungsgemäßen Vorgehensweisen ergeben sich aus abhängigen Ansprüchen.

Eine Ausgestaltung sieht vor, dass eine kontinuierliche Vorschubbewegung vorgegeben wird. Mit dieser Maßnahme, die mit einfachen Mitteln realisierbar ist, wird eine schnellstmögliche Ausführung der Bohrung sichergestellt.

Eine besonders vorteilhafte Ausgestaltung sieht vor, dass die Drehfrequenz und die Pulsationsfrequenz keine ganzzahligen Vielfache voneinander sind. Diese Maßnahme wirkt sich insbesondere auf die Spanform aus. Wenn die Drehfrequenz und die Pulsationsfrequenz auseinander fallen und keine ganzzahligen Vielfache voneinander sind, entsteht ein wellenförmiger Span, bei welchem sich hohe und niedrige Spandicken abwechseln. Dadurch wird ein Spanbruch bei kleinen Spanlängen sichergestellt.

Eine Ausgestaltung sieht vor, dass die Drehfrequenz und die Pulsationsfrequenz sowie gegebenenfalls der Pulsationshub unabhängig voneinander einstellbar sind. Mit dieser Maßnahme können die Kenngrößen des Bohrens an unterschiedliche Werkstücke und Werkstoffe sowie an unterschiedliche Bohrtechniken angepasst werden.

Eine Ausgestaltung sieht vor, dass der Vorschub pro Umdrehung des Bohrers und der Pulsationshub derart festgelegt werden, dass die Spandicke stets größer null ist. Diese Ausgestaltung stellt sicher, dass der Bohrer zu jedem Zeitpunkt im Schnitt bleibt.

Eine Ausgestaltung betrifft die Festlegung der Pulsationsfrequenz in Bezug auf die Drehfrequenz. Experimentell hat sich eine Festlegung der Pulsationsfrequenz im Bereich von 0,1 x Drehfrequenz bis 2,0 x Drehfrequenz als vorteilhaft herausgestellt. Eine Pulsationsfrequenz, die kleiner ist als die Drehfrequenz eignet sich insbesondere bei hohen Drehfrequenzen und/oder größeren Pulsationshüben. Eine höhere Pulsationsfrequenz als die Drehfrequenz eignet sich entsprechend bei niedrigen Drehfrequenzen und/oder kleineren Pulsationshüben.

Die erfindungsgemäßen Vorgehensweisen eignen sich für unterschiedliche Bohrtechniken. Eine erste Anwendung ist beim Spiralbohren gegeben, wobei vorzugsweise ein Kühlmittelfluss vorgesehen ist, der gleichzeitig den Abtransport der abgebrochenen Späne übernimmt.

Besonders eignen sich die erfindungsgemäßen Vorgehensweisen für das Tiefbohren, bei dem ein hohes Verhältnis von Bohrtiefe bezogen auf den Bohrdurchmesser auftreten kann.
Eingesetzt werden können das Einlippen-Bohren, das BTA-Bohren sowie das Ejector-Bohren. Beim Einlippen-Bohren wird das Kühlmittel in einem innerhalb des Bohrers angeordneten Kühlmittelkanal nach vorne und über eine Sicke im Bohrer zurücktransportiert. Beim Rücktransport werden gleichzeitig die Bohrspäne abtransportiert. Beim BTA-Bohren ist der Kühlmittelfluss umgekehrt. Allein bereits durch den Strömungsdruck des Kühlmittels können die durch die erfindungsgemäßen Vorgehensweisen entstehenden Späne abbrechen. Gegebenenfalls brechen auch solche Späne ab, die nur eine geringe oder sogar keine Dickenänderung aufweisen.

Die erfindungsgemäße Vorrichtung kann beispielsweise mit einer Bohrspindel realisiert werden, die eine Außen- und Innenspindel enthält, wobei beide Spindeln über wenigstens einen Mitnehmer in Drehrichtung gekoppelt sind und wobei die Innenspindel gegenüber der Außenspindel zur Vorgabe der Pulsationsbewegung in axialer Richtung verschiebbar ist. Bei dieser Realisierung der Bohrspindel werden die empfindlichen Präzisionslager der Bohrspindel nicht zusätzlich durch die Pulsationsbewegung belastet. Die auftretenden Pulsationskräfte werden entweder von einem Axiallager der Innenspindel oder von einem außerhalb der Innenspindel angeordneten Lager aufgenommen, das dem Pulsationsantrieb zugeordnet ist.

Die Pulsationsbewegung der Innenspindel kann mit einem Pulsationsantrieb erfolgen, der einen Exzenter sowie ein Pleuel enthält. Eine andere Möglichkeit, die in Bohrrichtung vor- und zurückgehende Pulsationsbewegung zu realisieren, sieht den Einsatz einer Taumelscheibe vor. Beide Systeme können vom Hub null bis zu einem vorgegebenen Hub stufenlos eingestellt werden.

Die Pulsationsbewegung kann gleichermaßen mit einem Kipphebel vom Pulsationsantrieb auf die gegebenenfalls zweiteilig ausgebildete Bohrspindel übertragen werden. Wenn der Kipphebel außerhalb der Mittellinie angeordnet oder als Gabel ausgebildet ist, kann ein zentraler Kühlmittel- und Spänekanal am Kipphebel vorbei oder durch die Gabel geführt werden (BTA-Bohren).

Eine andere Ausgestaltung sieht vor, dass die Bohrspindel auf einem Bohrschlitten angeordnet ist. Die Pulsationsbewegung kann dadurch realisiert werden, dass die Bohrspindel auf dem Bohrschlitten, welcher die Vorschubbewegung durchführt, vor- und zurückbewegt wird. Bei dieser Ausgestaltung kann die zweiteilige Ausbildung der Bohrspindel entfallen.

Eine andere Ausgestaltung sieht vor, dass der Bohrschlitten mit einer Vorschubspindel bewegt wird, die in einer Spindelmutter gelagert und geführt ist.

Gemäß einer besonders vorteilhaften Ausgestaltung ist vorgesehen, dass die Pulsationsbewegung durch ein Hin- und Herbewegen der Spindelmutter in radialer Richtung erzeugt wird.

Eine alternative Ausgestaltung sieht vor, dass der Pulsationsantrieb und der Vorschubantrieb zusammenfallen. Durch eine entsprechende Steuerung des Vorschub-Pulsations-Antriebs, der beispielsweise den Bohrschlitten bewegt, kann sowohl die Vorschubbewegung als auch die der Vorschubbewegung überlagerte kontinuierliche Pulsationsbewegung realisiert werden.

Eine weitere vorteilhafte Ausgestaltung, die insbesondere beim Spiralbohren eingesetzt werden kann, sieht die Anordnung des Pulsationsantriebs unmittelbar ar der Bohrspindel vor.

Weitere vorteilhafte Weiterbildungen und Ausgestaltungen sowohl des erfindungsgemäßen Bohrverfahrens als auch der erfindungsgemäßen Bohrvorrichtung ergeben sich aus weiteren abhängigen Ansprüchen und aus der folgenden Beschreibung.

### Zeichnung

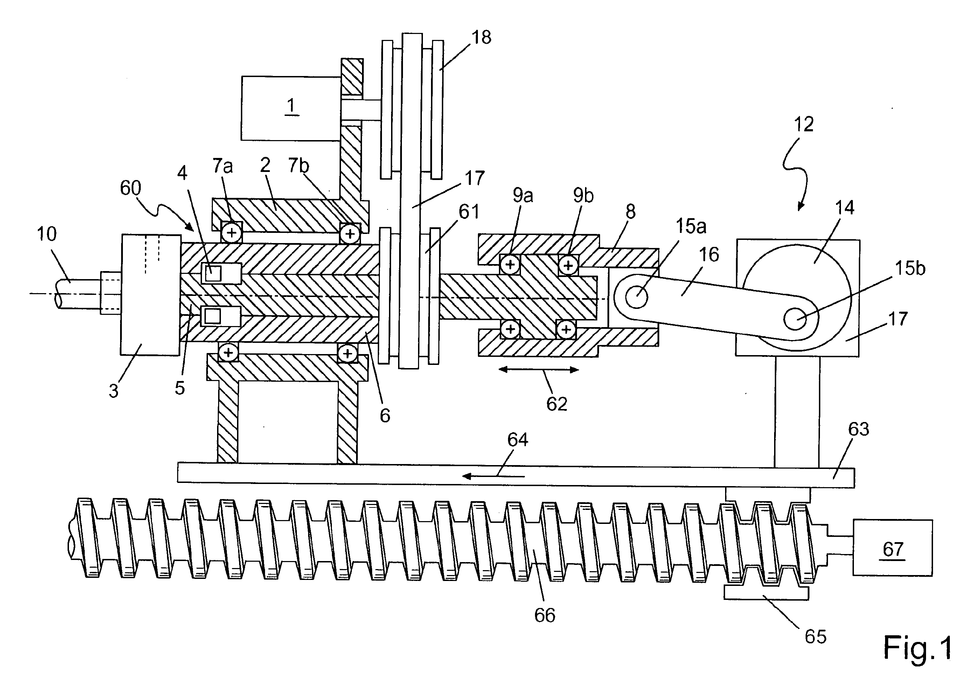

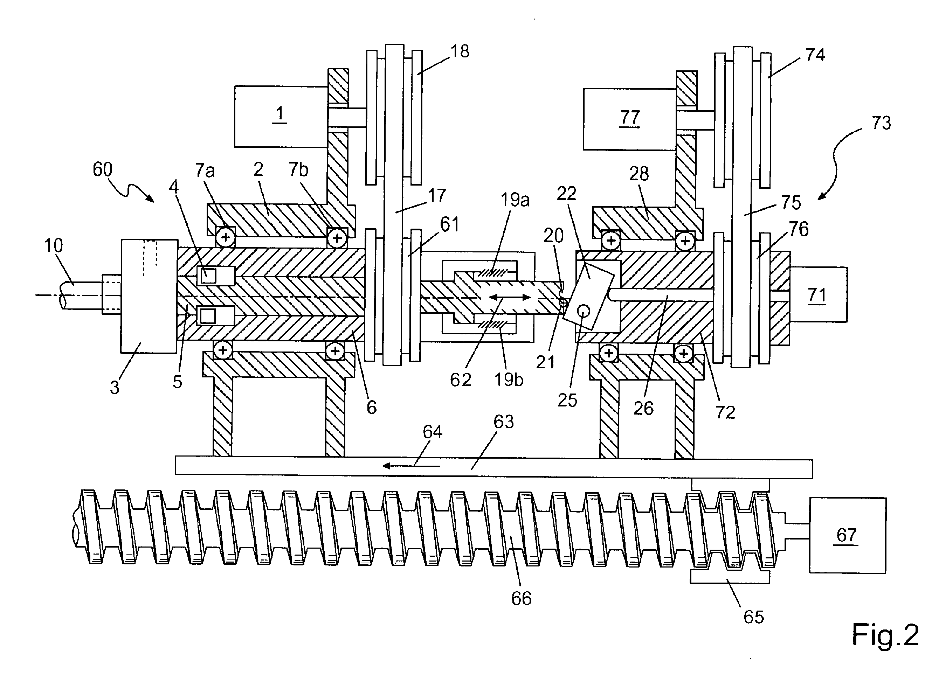

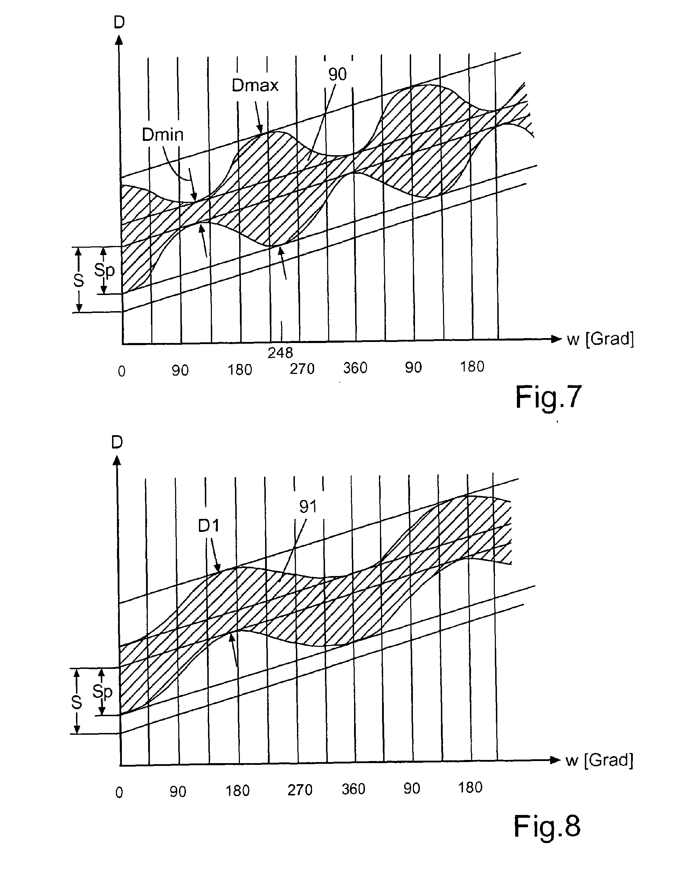

Figur 1 zeigt ein vereinfachtes Schnittbild durch eine erfindungsgemäße Bohrvorrichtung, Figuren 2, 3, 4a, 4b, 5, 6 zeigen alternative Ausgestaltungen einer erfindungsgemäßen Bohrvorrichtung und Figuren 7 und 8 zeigen Spandicken-Diagramme.

Figur 1 zeigt einen Servomotor 1, der als Drehantrieb einer Bohrspindel 60 vorgesehen ist. Ein erstes Drehantrieb-Antriebsrad 18, ein Drehantrieb-Antriebsriemen 17 sowie ein zweites Drehantrieb-Antriebsrad 61 übertragen die Drehbewegung des Drehantriebs 1 auf die Bohrspindel 60. Die in einem Spindelkasten 2 von einem vorderen und hinteren Spindellager 7a, 7b gelagerte Bohrspindel 60 ist zweiteilig ausgeführt und enthält eine Innenspindel 5 sowie eine Außenspindel 6. Die Innenspindel 5 und die Außenspindel 6 sind über wenigstens einen Spindelmitnehmer 4 in Drehrichtung der Bohrspindel 60 verkoppelt. Der Spindelmitnehmer 4 ist derart ausgestaltet, dass die Innenspindel 5 gegenüber der Außenspindel 6 in axialer Richtung der Bohrspindel 60 eine in Bohrrichtung vor- und zurückgehende Bewegung durchführen kann, die im Folgenden als Pulsationsbewegung 62 bezeichnet wird.

Mit der Innenspindel 5 ist ein Bohrer 10 verbunden. Ein Kühlmittel, das gegebenenfalls gleichzeitig zur Unterstützung des Abbrechens der Bohrspäne und insbesondere zum Abtransport der Bohrspäne vorgesehen ist, wird über eine Vorderend-Kühlmittelzuführung 3 dem Bohrer 10 zugeführt.

Am hinteren Ende der Innenspindel 5 ist ein Pulsationsmitnehmer 8 angeordnet, der die Innenspindel 5 über ein vorderes und hinteres Pulsations-Mitnehmerlager 9a, 9b in axialer Richtung zur Durchführung der Pulsationsbewegung 62 mitnimmt.

Die Pulsationsbewegung 62 wird durch eine in axialer Richtung hin- und hergehende Bewegung erzeugt, die ein erster Pulsationsantrieb 12 bereitstellt. Der erste Pulsationsantrieb 12 enthält einen Pulsations-Antriebsmotor 17 und eine verstellbare Exzenterscheibe 14, die über ein Pleuel 16 mit dem Pulsationsmitnehmer 8 verbunden ist. Das Pleuel 16 ist mit einer ersten Welle 15a am Pulsationsmitnehmer 8 und mit einer zweiten Welle 15b an der verstellbaren Exzenterscheibe 14 drehbar gelagert. Die nicht näher im Detail gezeigte verstellbare Exzenterscheibe 14 kann durch ein Verdrehen gegenüber einer nicht gezeigten Welle des Pulsations-Antriebsmotors 17 in ihrer Exzentrizität vorzugsweise kontinuierlich von null bis zu einem vorgegebenen Maximalwert verstellt werden. Der Pulsationshub der Pulsationsbewegung 62 kann demnach von wenigstens näherungsweise null bis zum doppelten Maximalwert der Exzentrizität vorgegeben werden. Die verstellbare Exzenterscheibe 14 sitzt auf einer Welle des Pulsations-Antriebsmotors 17, die vorzugsweise ebenfalls exzentrisch mit insbesondere der gleichen Exzentrizität angeordnet ist, sodass insgesamt der vierfache Maximalwert vorgegeben werden kann. Mit diesen Maßnahmen werden sämtliche Verstellmöglichkeiten zum Vorgeben des Pulsationshubs genutzt.

Der Spindelkasten 2 und der erste Pulsationsantrieb 12 sind auf einem Vorschubschlitten 63 angeordnet. Der Vorschubschlitten 63 ist zur Durchführung einer Vorschubbewegung 64 mit einer Spindelmutter 65 verbunden, in der eine Vorschubspindel 66 geführt und gelagert ist. Die Vorschubbewegung 64 kommt durch Drehen der Vorschubspindel 66 in der Spindelmutter 65 zustande. Zur Drehung der Vorschubspindel 66 ist ein Vorschubantrieb 67 vorgesehen.

Figur 2 zeigt ein vereinfachtes Schnittbild, das insbesondere einen zweiten Pulsationsantrieb 73 zur Bereitstellung der Pulsationsbewegung 62 betrifft. Diejenigen in Figur 2 gezeigten Teile, die mit den in Figur 1 gezeigten Teilen übereinstimmen, tragen jeweils dieselben Bezugszeichen. Die Pulsationsbewegung 62 wird gemäß der alternativen Ausgestaltung mit einer Taumelscheibe 22 erzielt. Die Taumelscheibe 22 wirkt mit einer Kugel 21 zusammen, die in einer Kugellaufbahn 20 abrollt. Die Neigung der Taumelscheibe 22 um einen Drehpunkt 25 wird mit einem Verstellbolzen 26 vorgenommen, den ein Pulsationshub-Verstellantrieb 71 in axialer Richtung verstellt.

Die Taumelscheibe 22 sowie der Verstellbolzen 26 sind in einer Pulsationsspindel 72 angeordnet, die von einem zweiten Pulsations-Antriebsmotor 77 in eine Drehbewegung versetzt werden kann. Der zweite Pulsations-Antriebsmotor 77 treibt die Pulsationsspindel 72 über ein erstes Pulsations-Antriebsrad 74, einen Pulsations-Antriebsriemen 75 und ein zweites Pulsations-Antriebsrad 76 in Drehrichtung oder gegen die Drehrichtung der Bohrspindel 60 an.

In Vorwärtsrichtung kann die Taumelscheibe 22 über die Kugel 21 eine Druckkraft auf die Innenspindel 5 ausüben. Die Rückholung der Innenspindel 5 erfolgt mittels Federkraft, die durch ein Federpaket 19a, 19b aufgebracht wird.

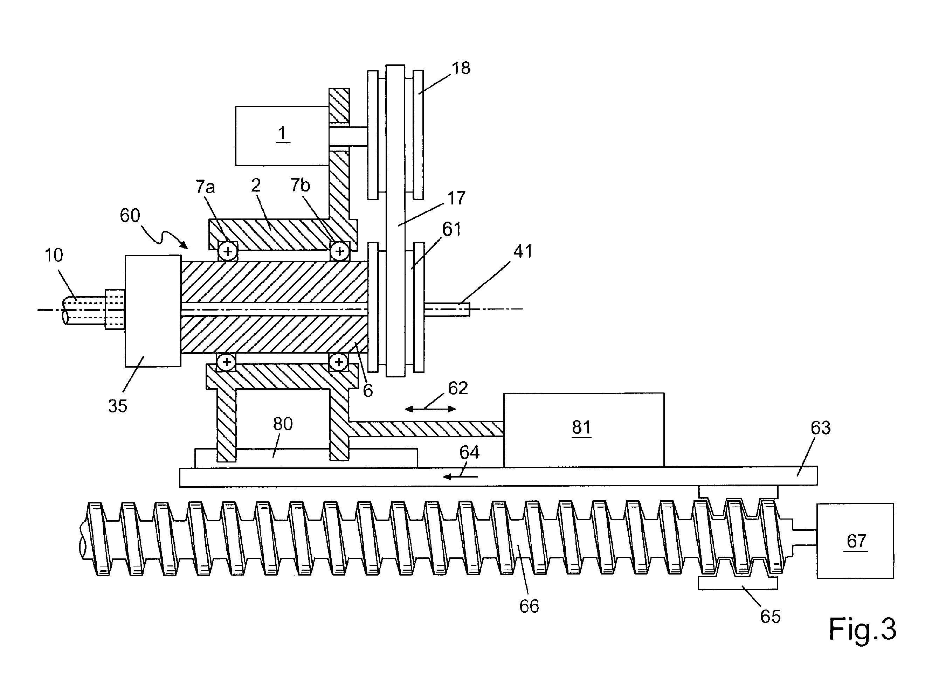

Figur 3 zeigt ein vereinfachtes Schnittbild einer weiteren Ausgestaltung, welche vorzugsweise die Bereitstellung der Pulsationsbewegung 62 und gegebenenfalls die Bereitstellung der Vorschubbewegung 64 betrifft. Diejenigen in Figur 3 gezeigten Teile, die mit den in Figur 1 gezeigten Teilen übereinstimmen, tragen jeweils wieder dieselben Bezugszeichen. Der Spindelkasten 2 ist gegenüber dem Bohrschlitten 63 mittels einer Längsführung 80 in Bohrrichtung verschiebbar. Ein dritter Pulsationsantrieb 81, der eine hin- und hergehende Bewegung ausführen kann, ist zur Bereitstellung der Pulsationsbewegung 62 vorgesehen.

Bei diesem Ausführungsbeispiel kann die zweiteilige Ausführung der Bohrspindel 60 entfallen. Das Schnittbild zeigt den Bohrer 10 mit einem innen liegenden Kühlmittel- und Spänekanal 41, der mit weiteren, in Figur 3 nicht näher gezeigten Einrichtungen verbunden ist. Die in Figur 1 gezeigte Vorderend-Kühlmittelzuführung 3 kann bei diesem Ausführungsbeispiel entfallen und wird beispielsweise durch einen Werkzeughalter 35 ersetzt.

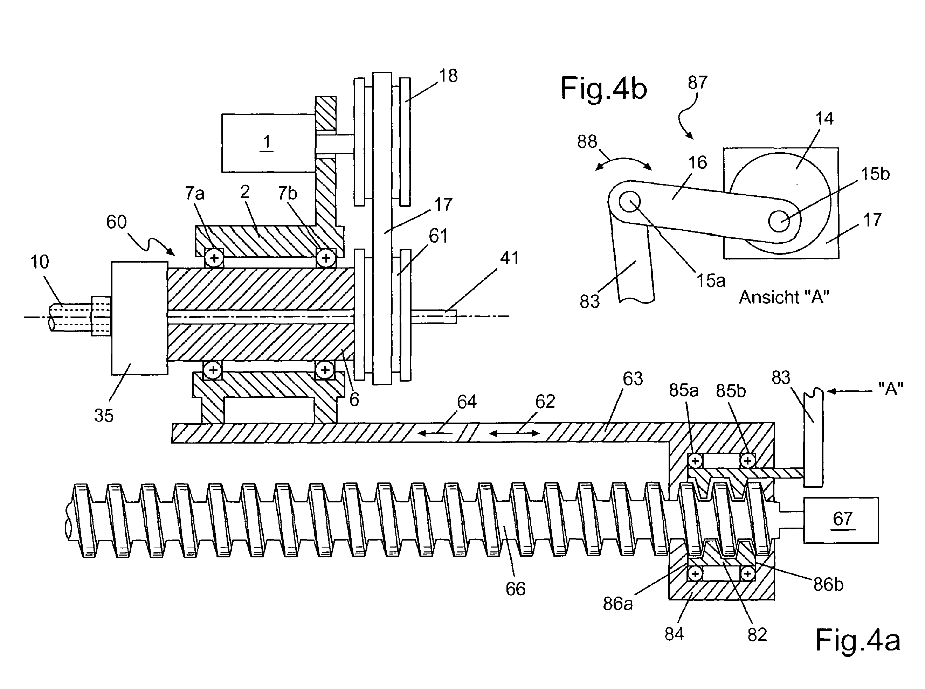

Figuren 4a und 4b zeigen eine weitere, besonders vorteilhafte Ausgestaltung, welche die Bereitstellung der Vorschubbewegung 64 und die Bereitstellung der Pulsationsbewegung 62 betrifft. Diejenigen in den Figuren 4a und 4b gezeigten Teile, die mit den in Figur 1 gezeigten Teilen übereinstimmen, tragen jeweils dieselben Bezugszeichen. Die bisher gezeigte Spindelmutter 65 ist durch eine drehbare Spindelmutter 82 ersetzt, die mit einem Getriebeteil 83 verbunden ist, mit dem die drehbare Spindelmutter 82 in radialer Richtung hin- und hergedreht werden kann. Die drehbare Spindelmutter 82 ist in einem Spindelmuttermitnehmer 84 angeordnet, der Teil des Vorschubschlittens 63 ist. In radialer Richtung ist die drehbare Spindelmutter 82 mit einem ersten und zweiten Spindelmutterlager 85a, 85b gegen den Spindelmuttermitnehmer 84 abgestützt. Die nicht sichtbaren Stirnflächen 86a, 86b der drehbaren Spindelmutter 82 sind in axialer Richtung auf Innenflächen des Spindelmuttermitnehmers 84 abgestützt.

Die Ansicht A auf zumindest einen Teil des Getriebeteils 83 ist in Figur 4b gezeigt. Figur 4b zeigt einen vierten Pulsationsantrieb 87, der beispielsweise als Exzenterantrieb entsprechend dem ersten Pulsationsantrieb 12 realisiert ist. Das Pleuel 16 ist mit dem Getriebeteil 83 drehbar verbunden, derart, dass das Getriebeteil 83 bezogen auf die Bohrrichtung in radialer Richtung eine hin- und hergehende Bewegung 88 ausführt.

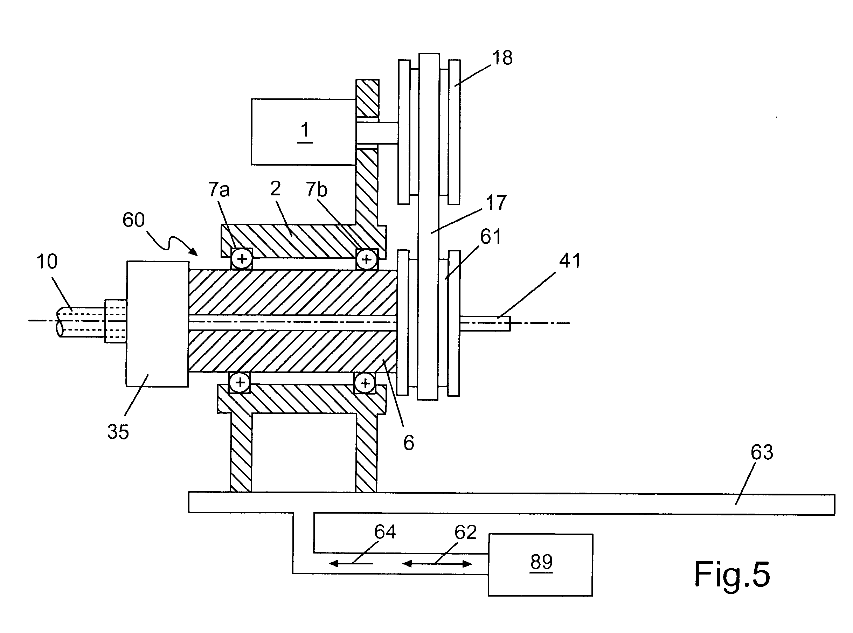

Figur 5 zeigt ein vereinfachtes Schnittbild einer weiteren vorteilhaften Ausgestaltung, welche die Bereitstellung der Vorschubbewegung 64 und die Bereitstellung der Pulsationsbewegung 62 betrifft. Die in Figur 5 gezeigten Teile, die mit den in Figur 1 gezeigten Teilen übereinstimmen, tragen jeweils dieselben Bezugszeichen. Ein mit dem Bohrschlitten 63 verbundener kombinierter Vorschub-Pulsations-Antrieb 89 stellt neben der vorzugsweise kontinuierlichen Vorschubbewegung 64 gleichzeitig die der Vorschubbewegung 64 überlagerte kontinuierliche Pulsationsbewegung 62 bereit.

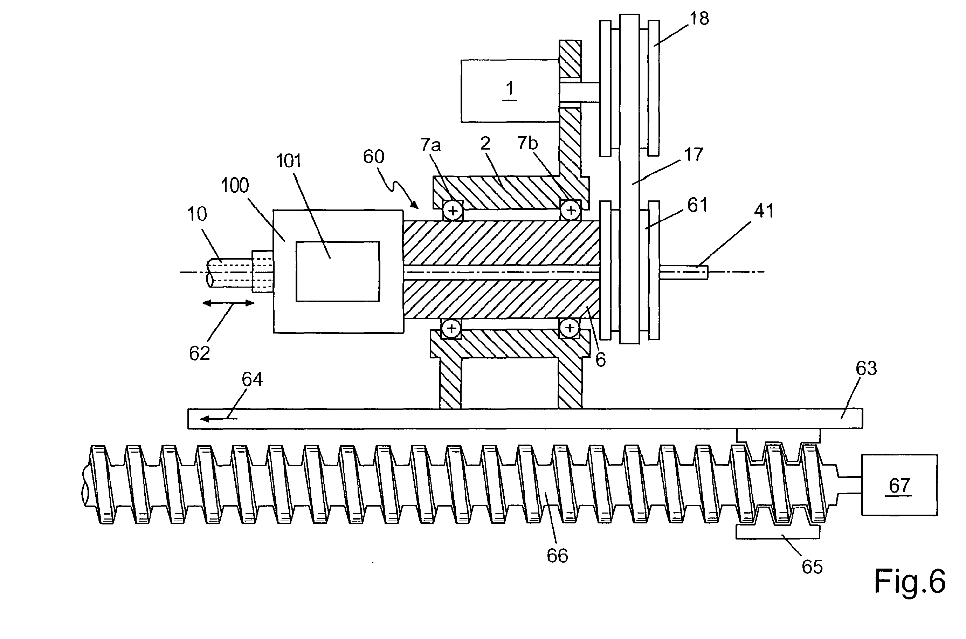

Figur 6 zeigt ein vereinfachtes Schnittbild einer anderen vorteilhaften Ausgestaltung, welche die Bereitstellung der Vorschubbewegung 64 und insbesondere die Bereitstellung der Pulsationsbewegung 62 betrifft. Die in Figur 6 gezeigten Teile, die mit den in Figur 1 gezeigten Teilen übereinstimmen, tragen jeweils dieselben Bezugszeichen. Die in den Figuren 1 und 2 gezeigte Vorderend-Kühlmittelzuführung 3 bzw. der in den Figuren 3, 4a und 5 gezeigte Werkzeughalter 35 ist ersetzt durch eine Pulsationsantrieb-Aufnahme 100, die einen fünften Pulsationsantrieb 101 enthält.

Die in den Figuren 7 und 8 gezeigten Spandicken-Diagramme zeigen Spanformen 90, 91 in Abhängigkeit vom Drehwinkel w des Bohrers 10. Eingetragen sind der Vorschub S pro Umdrehung des Bohrers 10 und der Pulsationshub Sp. In Figur 7 ist eine minimale Spandicke Dmin und eine maximale Spandicke Dmax sowie eine erste Spanform 90 eingetragen. In Figur 8 ist eine wellenförmige Spanform 90 eingetragen, die eine gleichmäßige Spandicke D1 aufweist.

### Erfindungsgemäß wird folgendermaßen vorgegangen:

Mit den in den Figuren 1-6 gezeigten Ausführungsbeispielen der erfindungsgemäßen Bohrvorrichtung wird der Vorschubbewegung 64 die kontinuierliche, in Bohrrichtung vor- und zurückgehende Pulsationsbewegung 62 überlagert.

Die Vorschubbewegung 64 wird beispielsweise mit dem ersten Vorschubantrieb 67 realisiert, der die Vorschubspindel 66 antreibt, die in einer Spindelmutter 65 geführt ist, die mit dem Bohrschlitten 63 verbunden ist. Durch eine Drehung der Vorschubspindel 66 wird der Bohrschlitten 63 mit der Vorschubbewegung 64 beaufschlagt.

Alternativ zum System mit der Vorschubspindel 66 und der Spindelmutter 65 kann ein Linearantrieb vorgesehen sein, der vorzugsweise den Ausführungsbeispielen gemäß Figur 3 und Figur 5 zugrunde liegt. Der in Figur 3 gezeigte dritte Pulsationsantrieb 81 kann gegebenenfalls neben der Pulsationsbewegung 62 zusätzlich die Vorschubbewegung 64 übernehmen. In diesem Fall können die Vorschubspindel 66 und die Spindelmutter 65 entfallen. Bei dem in den Figuren 4a, 4b gezeigten Ausführungsbeispiel wird die Pulsationsbewegung 62 durch ein Verdrehen der drehbaren Spindelmutter 82 erzielt. Bei dem in Figur 5 gezeigten Ausführungsbeispiel ist die Kombination der Vorschubbewegung 64 und der Pulsationsbewegung 62 durch den kombinierten Vorschub-Pulsations-Antrieb 89 vorgegeben. Bei dem in Figur 6 gezeigten Ausführungsbeispiel wird die Pulsationsbewegung 62 durch den in der Pulsationsantrieb-Aufnahme 100 angeordneten fünften Pulsationsantrieb 101 bereitgestellt.

Die Vorschubbewegung 64 erfolgt vorzugsweise kontinuierlich, um einen möglichst hohen Arbeitstakt zu erzielen. Weiterhin ist vorzugsweise eine gleichförmige kontinuierliche Vorschubbewegung 64 vorgesehen, die am einfachsten zu realisieren ist, da der Vorschubantrieb 67, 81, 82 hinsichtlich des Vorschubs mit wenigstens einer konstanten elektrischen Kenngröße betrieben werden kann.

Wesentlich für das erfindungsgemäße Bohrverfahren ist die Überlagerung der Vorschubbewegung 64 mit der kontinuierlichen Pulsationsbewegung 62, die auf die unterschiedlichsten Arten bereitgestellt werden kann.

In Figur 1 ist der erste Pulsationsantrieb 12 gezeigt, der als Exzenterantrieb ausgebildet ist. Der erste Pulsations-Antriebsmotor 17 des ersten Pulsationsantriebs 12 weist vorzugsweise eine exzentrisch angeordnete Welle auf, auf der die verstellbare Exzenterscheibe 14 angeordnet ist. Der Pulsationshub Sp kann von theoretisch null bis zu einem vorgegebenen Maximalwert eingestellt werden, der vorzugsweise den vorgegebenen Vorschub S pro Umdrehung des Bohrers 10 nicht übersteigt. Ein Pulsationshub Sp von null würde einem herkömmlichen Bohrverfahren entsprechen, bei dem keine Pulsationsbewegung 62 auftritt.

Beim Tiefbohren liegen die Vorschübe beispielsweise im Bereich von wenigen hundertstel Millimetern pro Umdrehung des Bohrers 10, beispielsweise bei 0,02 mm. Der Pulsationshub Sp muss dann mit hoher Genauigkeit auf noch kleinere Werte als beispielsweise 0,02 mm eingestellt werden können.

Die Drehbewegung der verstellbaren Exzenterscheibe 14 wird mit dem Pleuel 16 in die Pulsationsbewegung 62 umgesetzt. Bei einer gleichförmigen Drehbewegung der verstellbaren Exzenterscheibe 14 ergibt sich ein sinusförmiger Verlauf der Pulsationsbewegung 62.

Die Pulsationsbewegung 62 wird mit dem Pulsationsmitnehmer 8 auf die Innenspindel 5 der Bohrspindel 60 übertragen. Das vordere und das gegebenenfalls vorgesehene hintere Pulsations-Mitnehmerlager 9a, 9b nimmt die Drehbewegung der Innenspindel 5 auf und sorgt für die Übertragung der Pulsationsbewegung 62 auf die Innenspindel 5.

Die Drehbewegung der Bohrspindel 60 wird vom Drehantrieb 1 bereitgestellt, der die Bohrspindel 60 über das erste Drehantrieb-Antriebsrad 18, den Drehantrieb-Antriebsriemen 17 und das zweite Drehantrieb-Antriebsrad 61 antreibt. Die Drehfrequenz wird vorzugsweise auf die Vorschubbewegung 64 abgestimmt, um einen vorgegebenen Vorschub S pro Umdrehung des Bohrers 10 einstellen zu können. Wenn die Drehfrequenz und die Pulsationsfrequenz übereinstimmen oder die eine Frequenz ein ganzzahliges Vielfaches der anderen Frequenz ist, würde die in Figur 8 gezeigte wellenförmige Spanform 91 entstehen, die überall die gleiche Spandicke D1 aufweist. Durch die wellenförmigen Ausbildung des Spans kann durch den Kühlmitteldruck ein Brechen des Spans auftreten.

Gemäß einer besonders vorteilhaften Ausgestaltung des erfindungsgemäßen Bohrverfahrens ist vorgesehen, dass die Drehfrequenz und die Pulsationsfrequenz kein ganzzahliges Vielfaches voneinander sind. Der Spezialfall, dass beide Frequenzen gleich sind, ist hiermit eingeschlossen. Dadurch entsteht eine unterschiedliche Spandicke D, wie in Figur 7 dargestellt. Die unterschiedliche Spandicke D mit den Minima Dmin und den Maxima Dmax führt in jedem Fall zu einem Spanbruch und damit zu kurzen Bohrspänen, die besonders einfach vom Kühlmittel ausgespült werden können.

Die maximale Spandicke Dmax sowie die minimale Spandicke Dmin können durch das Zusammenspiel zwischen dem vorgegebenen Vorschub S pro Umdrehung des Bohrers 10 und dem Pulsationshub Sp vorgegeben werden. Ein zuverlässiger Spanbruch wird erreicht, wenn die minimale Spandicke Dmin beispielsweise 50% der maximalen Spandicke Dmax beträgt. Es reicht deshalb aus, wenn der Pulsationshub Sp auf entsprechend beispielsweise 50% des Vorschubs S pro Umdrehung des Bohrers 10 eingestellt wird. Die Spanlänge wird durch die Anzahl der Pulsationshübe Sp pro Umdrehung des Bohrers 10 oder durch die Anzahl der Pulsationshübe Sp pro mehreren Umdrehungen des Bohrers 10 bestimmt. Durch die Möglichkeit, sowohl den Pulsationshub Sp als auch die Pulsationsfrequenz verändern zu können, kann das Spanungsverhalten unterschiedlicher Werkstoffe berücksichtigt werden.

Die Abstände zwischen der maximalen Spandicke Dmax und der minimalen Spandicke Dmin werden durch das Verhältnis von Drehfrequenz und Pulsationsfrequenz eingestellt.

Als geeignet haben sich Werte herausgestellt, bei denen die Pulsationsfrequenz im Bereich von 0,1 x Drehfrequenz bis 2,0 x Drehfrequenz liegt. Beispielsweise beträgt der Faktor 0,69 oder 1,875. Eine Pulsationsfrequenz, die kleiner als die Drehfrequenz ist, eignet sich insbesondere bei höheren Drehfrequenzen und/oder größeren Pulsationshüben Sp und eine höhere Pulsationsfrequenz als die Drehfrequenz eignet sich entsprechend bei niedrigeren Drehfrequenzen und/oder kleineren Pulsationshüben Sp.

Sowohl die Vorschubbewegung 64 als auch insbesondere die Pulsationsbewegung 62 können auf die unterschiedlichsten Arten bereitgestellt werden. Anstelle des in Figur 1 gezeigten ersten Pulsationsantriebs 12, der als Exzenterantrieb realisiert ist, kann die in Figur 2 gezeigte Realisierung mit der Taumelscheibe 22 vorgesehen sein. Bei der Einstellung der Pulsationsfrequenz muss bei diesem Ausführungsbeispiel berücksichtigt werden, dass die effektive Pulsationsfrequenz die Differenz zwischen der Drehzahl der Bohrspindel 60 und der Drehzahl der Pulsationsspindel 72 ist. Der Pulsationshub Sp wird bei diesem Ausführungsbeispiel mit dem Pulsationshub-Verstellantrieb 71 vorgegeben, der den Verstellbolzen 26 in Bohrrichtung hin- und herbewegt, wobei die Neigung der Taumelscheibe 22 durch Drehung um die Drehachse 25 verändert wird.

Eine andere Realisierung der Pulsationsbewegung 62 sieht vor, dass der Spindelkasten 2 gegenüber dem Bohrschlitten 63 in Bohrrichtung bewegbar geführt ist. Bei dem in Figur 3 gezeigten Ausführungsbeispiel wird der Spindelkasten 2 auf wenigstens einer Längsführung 80 geführt. Der dritte Pulsationsantrieb 81, der vorzugsweise als Linearantrieb ausgestaltet ist, überlagert die Pulsationsbewegung 62 der mit dem Bohrschlitten 63 vorgegebenen Vorschubbewegung 64. Der dritte Pulsationsantrieb 81 kann gemäß dem in Figur 1 gezeigten Ausführungsbeispiel auch als Exzenterantrieb ausgebildet sein.

In einer alternativen Ausgestaltung kann der dritte Pulsationsantrieb 81 sowohl die Vorschubbewegung 64 als auch die Pulsationsbewegung 62 durchführen. Der Bohrschlitten 63 braucht bei dieser alternativen Ausgestaltung nicht in Bohrrichtung bewegt zu werden. Die Vorschubspindel 66, die Spindelmutter 65 sowie der Vorschubantrieb 67 können entfallen. Dem Bohrschlitten 63 kommt dann die Funktion einer Montageplatte zu.

Eine andere Möglichkeit, die Pulsationsbewegung 62 bereitzustellen, beruht auf einer Verdrehung der Spindelmutter 65. Eine Realisierungsmöglichkeit ist in den Figuren 4a und 4b gezeigt. Der in Figur 4b gezeigte vierte Pulsationsantrieb 87 kann beispielsweise als Exzenterantrieb ausgestaltet sein. Wesentliche Teile können dann mit dem in Figur 1 gezeigten ersten Pulsationsantrieb 12 übereinstimmen. Das Pleuel 16 ist anstelle mit dem Pulsationsmitnehmer 8 mit dem Getriebeteil 83 drehbar gelagert verbunden, das die, bezogen auf die Bohrrichtung in radialer Richtung hin- und hergehende Bewegung 88 auf die drehbare Spindelmutter 82 überträgt. Die im Spindelmutter-Mitnehmer 84 angeordnete drehbare Spindelmutter 82 überträgt sowohl die Vorschubbewegung 64 als auch die Pulsationsbewegung 62 über die Stirnseiten 86a und 86b auf die Innenflächen des Spindelmutter-Mitnehmers 84.

Bei dem in Figur 5 gezeigten Ausführungsbeispiel übernimmt der kombinierte Vorschub-Pulsations-Antrieb 89 sowohl die Pulsationsbewegung 62 als auch die Vorschubbewegung 64. Der kombinierte Vorschub-Pulsations-Antrieb 89 ist mit dem Bohrschlitten 63 verbunden, der somit sowohl die Vorschubbewegung 64 als auch die Pulsationsbewegung 62 durchführt.

Weitere Realisierungsmöglichkeiten der Pulsationsbewegung 62 sind dadurch möglich, dass die Bohrspindel 60 oder die gegebenenfalls vorhandene Innenspindel 5 mit einem Kipphebel in eine hin- und hergehende Bewegung versetzt werden. Der Kipphebel kann am vorderen oder hinteren Ende der Bohrspindel 60 bzw. der Innenspindel 5 angreifen. Wenn der Kipphebel außerhalb der Mittellinie angeordnet oder als Gabel ausgebildet ist, kann ein zentraler Kühlmittel- und Spänekanal am Kipphebel vorbei oder durch die Gabel geführt werden (BTA-Bohren).

Eine vorteilhafte andere Realisierungsmöglichkeit der Pulsationsbewegung 62 ist in Figur 6 gezeigt. Diese Realisierung ist neben dem Tiefbohren insbesondere auch für das Spiralbohren geeignet. Die Vorschubbewegung 64 kann mit der in der Spindelmutter 65 geführten Vorschubspindel 66 oder auf andere Weise bereitgestellt werden. Die Pulsationsantrieb-Aufnahme 100, die als Vorsatzkopf ausgestaltet sein kann, ist an der Bohrspindel 60 angeordnet. Die Pulsationsantrieb-Aufnahme 100 kann am vorderen Ende der Bohrspindel 60 wie im gezeigten Ausführungsbeispiel oder am hinteren Ende angeordnet sein. Die Pulsationsantrieb-Aufnahme 100 enthält vorzugsweise die Werkzeugaufnahme sowie insbesondere den fünften Pulsationsantrieb 101.

## Patentansprüche

1. Bohrverfahren, bei dem ein Bohrer (10) mit einer vorgebbaren Drehfrequenz angetrieben und bei dem eine Vorschubbewegung (64) des Bohrers (10) vorgegeben wird, **dadurch gekennzeichnet, dass** der Vorschubbewegung (64) eine kontinuierliche, in Bohrrichtung vor- und zurückgehende Pulsationsbewegung (62) mit vorgebbarer Pulsationsfrequenz und vorgebbarem Pulsationshub (Sp) überlagert wird.

2. Bohrverfahren nach Anspruch 1, **dadurch gekennzeichnet, dass** eine kontinuierliche Vorschubbewegung (62) vorgegeben wird.

3. Bohrverfahren nach Anspruch 1, **dadurch gekennzeichnet, dass** die Drehfrequenz und die Pulsationsfrequenz keine ganzzahligen Vielfache voneinander sind.

4. Bohrverfahren nach Anspruch 1, **dadurch gekennzeichnet, dass** die Drehfrequenz und/oder die Pulsationsfrequenz und/oder der Pulsationshub (Sp) unabhängig voneinander vorgebbar sind.

5. Bohrverfahren nach Anspruch 1, **dadurch gekennzeichnet, dass** der Vorschub S pro Umdrehung des Bohrers (10) und der Pulsationshub (Sp) derart festgelegt werden, dass die Spandicke (D) stets größer null ist.

6. Bohrverfahren nach Anspruch 1, **dadurch gekennzeichnet, dass** die Pulsationsfrequenz im Bereich von 0,1 x Drehfrequenz bis 2,0 x Drehfrequenz liegt.

7. Bohrverfahren nach einem der vorhergehenden Ansprüche, **gekennzeichnet durch** die Verwendung beim Tiefbohren.

8. Bohrverfahren nach einem der Ansprüche 1 bis 6, **gekennzeichnet durch** die Verwendung beim Spiralbohren, bei dem eine Spanentfernung während des Bohrens vorgesehen ist.

9. Bohrvorrichtung mit einem Drehantrieb (1) zum Betreiben eines Bohrers (10) mit einer vorgebbaren Drehfrequenz und mit einem Vorschubantrieb (67, 81, 89) zum Bereitstellen einer Vorschubbewegung (64) des Bohrers (10), **dadurch gekennzeichnet, dass** ein Pulsationsantrieb (12, 73, 81, 87, 89, 101) vorgesehen ist, welcher der Vorschubbewegung (64) eine kontinuierliche, in Bohrrichtung vor- und zurückgehende Pulsationsbewegung (62) überlagert.

10. Bohrvorrichtung nach Anspruch 9, **dadurch gekennzeichnet, dass** eine drehbare Außen- und Innenspindel (5, 6) vorgesehen sind, dass beide Spindeln (5, 6) über wenigstens einen Mitnehmer (4) in Drehrichtung verkoppelt sind und dass die Innenspindel (5) gegenüber der Außenspindel (6) zur Vorgabe der Pulsationsbewegung (62) in axialer Richtung verschiebbar ausgebildet ist.

11. Bohrvorrichtung nach Anspruch 10, **dadurch gekennzeichnet, dass** der Pulsationsantrieb (12, 73, 81, 87, 89, 101) eine Exzenterscheibe (14) und ein Pleuel (16) enthält.

12. Bohrvorrichtung nach Anspruch 10, **dadurch gekennzeichnet, dass** der Pulsationsantrieb (12, 73, 81, 87, 89, 101) eine Taumelscheibe (22) enthält.

13. Bohrvorrichtung nach Anspruch 10, **dadurch gekennzeichnet, dass** der Pulsationsantrieb (12, 73, 81, 87, 89, 101) einen Kipphebel enthält.

14. Bohrvorrichtung nach Anspruch 9, **dadurch gekennzeichnet, dass** eine Bohrspindel (60) zur Aufnahme des Bohrers (10) vorgesehen ist und dass der Pulsationsantrieb (12, 73, 81, 87, 89, 101) die Bohrspindel (60) in Bohrrichtung vor- und zurückbewegt.

15. Bohrvorrichtung nach Anspruch 9, **dadurch gekennzeichnet, dass** die Bohrspindel (60) auf einem Bohrschlitten (63) angeordnet ist und dass der Vorschubantrieb (67, 81, 82) den Bohrschlitten (63) bewegt.

16. Bohrvorrichtung nach Anspruch 15, **dadurch gekennzeichnet, dass** der Vorschubantrieb (67, 81, 82) den Bohrschlitten (63) über eine in einer Spindelmutter (65) geführten Vorschubspindel (66) antreibt.

17. Bohrvorrichtung nach Anspruch 16, **dadurch gekennzeichnet, dass** der Pulsationsantrieb (12, 73, 81, 87, 89, 101) die Spindelmutter (65) zur Bereitstellung der Pulsationsbewegung (62) in radialer Richtung hin- und herbewegt.

18. Bohrvorrichtung nach Anspruch 16, **dadurch gekennzeichnet, dass** der Vorschubantrieb (67, 81, 82) identisch mit dem Pulsationsantrieb (12, 73, 81, 87, 89, 101) ist.

19. Bohrvorrichtung nach Anspruch 9, **dadurch gekennzeichnet, dass** eine Bohrspindel (60) vorgesehen ist und dass der Bohrspindel (60) eine Pulsationsantrieb-Aufnahme (100) zugeordnet ist, die den Pulsationsantrieb (12, 73, 81, 87, 89, 101) enthält.
